# EUROPÄISCHE PATENTSCHRIFT

(11) **EP 2 713 036 B1**
(45) Veröffentlichungstag und Bekanntmachung des Hinweises auf die Patenterteilung: **07.11.2018**
(21) Anmeldenummer: 13004332.6
(22) Anmeldetag: 04.09.2013
(51) Int. Cl.: F02M 3/10, F02M 3/08, F02M 19/04, F16B 35/00

(54) **Verstellsicherung für eine Einstellschraube an einem Vergaser**
Adjustment securing means for an adjustment screw to a carburetor
Sécurité de réglage pour une vis de réglage sur un carburateur

(30) Priorität: 28.09.2012 DE 102012019128
(43) Veröffentlichungstag der Anmeldung: 02.04.2014
(73) Patentinhaber: Andreas Stihl AG & Co. KG, 71336 Waiblingen (DE)
(72) Erfinder: Levien, Patrick, D-70736 Fellbach (DE); Baumhauer, Achim, D-73527 Schwäbisch Gmünd (DE); Gernhard, Walter, D-71394 Kernen (DE)
(74) Vertreter: Wasmuth, Rolf

(56) Entgegenhaltungen:
- JP-A- S5 652 553
- JP-A- 2000 186 621
- US-A- 5 635 113
- US-A- 5 667 734
- US-A- 5 753 148
- US-A1- 2012 146 250

## Beschreibung

Die Erfindung betrifft eine Verstellsicherung nach dem Oberbegriff des Anspruchs 1.

Aus der DE 42 10 553 C2 ist eine Verstellsicherung für die Einstellschraube eines Vergasers bekannt, die aus einer auf dem Kopf der Einstellschraube drehfest gehaltenen Kappe besteht, die mit geringem radialen Spiel von einer etwa koaxial liegenden, gehäusefesten Wandhülse umgeben ist. Der Kappe ist in Drehrichtung der Einstellschraube ein gehäusefester Anschlag in der Wandhülse zugeordnet, so dass nach dem Aufsetzen der Kappe auf die Einstellschraube der Benutzer diese nur noch um einen konstruktiv festgelegten, begrenzten Drehwinkel verstellen kann. Hierdurch wird gewährleistet, dass nach Voreinstellung des Vergasers in der Fertigung der Benutzer diese vorgegebenen Einstellungen nur noch in einem begrenzten Bereich verändern kann, in dem eine zu fette Kraftstoffeinstellung ebenso unterbunden ist wie eine zu magere Kraftstoffeinstellung. Eine zu fette Einstellung ist negativ für das Abgas; eine zu magere Einstellung beeinträchtigt die Betriebssicherheit des Verbrennungsmotors.

Die Kappe der Verstellsicherung ist auf den Kopf der Einstellschraube aufgedrückt, die eine äußere Rändelung oder Zahnung aufweist. Entsprechend ist in dem Verbindungsabschnitt der Kappe ein Aufnahmeraum mit einer inneren Rändelung oder Zahnung vorgesehen, so dass ein Verstellen der Einstellschraube nur noch zusammen mit der Kappe möglich ist.

Aus der JP 2000 186621 A1 ist eine entsprechende Verstellsicherung für eine Einstellschraube an einem Vergaser bekannt, die dem Benutzer eine Verstellmöglichkeit der Einstellschraube um einen nur begrenzten Drehwinkel erlaubt.

Die Verstellsicherung selbst ist gegen Manipulation durch einen Benutzer zu schützen. Die Verstellsicherung muss daher so ausgelegt werden, dass auch mutwillig eine Zerstörung der Begrenzung des Verstellbereichs durch einen Benutzer kaum möglich ist.

Aus der JP 560052553 A1 ist bekannt, die Zugangsöffnung zu einer Einstellschraube an einem Vergaser durch eine im Vergasergehäuse festgelegte Blende zu begrenzen.

Der Erfindung liegt die Aufgabe zugrunde, eine Verstellsicherung der gattungsgemäßen Art derart auszubilden, dass keine Verstellmomente auf die Einstellschraube aufgebracht werden können, die oberhalb eines die Verstellsicherung zerstörenden Grenzdrehmomentes liegen.

Die Aufgabe wird erfindungsgemäß nach den kennzeichnenden Merkmalen des Anspruchs 1 gelöst.

Die auf die Einstellschraube aufgesetzte Kappe besteht aus Kunststoff. In der Kappe ist eine Durchgriffsöffnung zu einer Eingriffsöffnung im Kopf der Einstellschraube ausgebildet, so dass nach einer Vormontage der Kappe bei der Fertigung oder im Service mit einem geeigneten Einstellwerkzeug die Einstellschraube einstellbar ist. Die vormontierte Kappe ist lediglich in die Wandhülse eingesetzt und in dieser Stellung mit der Einstellschraube noch nicht drehfest verbunden. Die Einstellschraube kann also durch das die Eingriffsöffnung durchragende Einstellwerkzeug ohne Begrenzung des Verstellbereichs verstellt werden, wobei das Einstellwerkzeug in die Eingriffsöffnung im Kopf der Einstellschraube eingreift.

Um zu verhindern, dass ein Benutzer mit einem größeren Werkzeug auf die Eingriffsöffnung im Kopf der Einstellschraube zugreift, ist vorgesehen, dass die Durchgriffsöffnung in einer Scheibe aus einem metallischen Material ausgebildet ist, die in der Kappe verliersicher gehalten ist. Die Durchgriffsöffnung ist durch die Scheibe aus einem metallischen Material in ihrer Form und Öffnungsweite begrenzt. Ein größeres Werkzeug kann somit nicht verwendet werden, da das metallische Material der Scheibe ein Durchstoßen der Durchgriffsöffnung mit einem Werkzeug, dessen Durchmesser größer als die Durchgriffsöffnung ist, verhindert.

Die Eingriffsöffnung im Kopf der Einstellschraube ist in ihrer Form und/oder Öffnungsweite nachgiebig gestaltet, insbesondere elastisch nachgiebig gestaltet, wobei die Elastizität so ausgelegt ist, dass ein über die Eingriffsöffnung in die Einstellschraube einzuleitendes Verstellmoment deutlich unterhalb des den Anschlag zerstörenden Grenzdrehmomentes liegt. So kann nur ein maximal zulässiges Verstellmoment über die Eingriffsöffnung im Kopf der Einstellschraube übertragen werden.

Nach der Einstellung der Einstellschraube, die die Leerlaufschraube oder die Volllastschraube des Vergasers sein kann, wird die Kappe drehfest auf den Kopf der Einstellschraube aufgedrückt, so dass die Einstellschraube nur noch zusammen mit der Kappe gedreht werden kann, wobei der Drehwinkel in der Wandhülse auf einen zulässigen Verstellbereich von weniger als 360° begrenzt ist, z. B. auf etwa 270° begrenzt ist.

Das Einstellwerkzeug für die Stellschraube hat einen Durchmesser, der durch den Durchmesser der Durchgriffsöffnung begrenzt ist. Dadurch ist das von dem Einstellwerkzeug aufzubringende Verstellmoment begrenzt; ein durch das Einstellwerkzeug maximal aufbringbares Verstellmoment ist geringer als das den Anschlag zerstörende Grenzdrehmoment.

Durch die Ausbildung der Verstellsicherung mit einer Kappe, deren Durchgriffsöffnung durch eine Scheibe aus einem metallischen Material in ihrer Form und Öffnungsweite begrenzt ist, kann verhindert werden, dass mit einem nicht angepassten Werkzeug auf die Eingriffsöffnung im Kopf der Einstellschraube zugegriffen wird. Die Verstellsicherung ist gegen ein zu hohes Verstellmoment geschützt.

In einfacher Weise ist die im Kopf der Einstellschraube vorgesehene Eingriffs-öffnung für ein Einstellwerkzeug von Wänden begrenzt, die bei Überschreiten eines maximal zulässigen Verstellmomentes radial elastisch oder zerstörend ausweichen und so ein Durchdrehen des Einstellwerkzeugs in der Eingriffsöffnung der Einstellschraube bewirken. Zweckmäßig können die die Eingriffsöffnung begrenzenden Wände durch Axialschlitze in einen oder mehrere nachgiebige Wandabschnitte aufgeteilt sein.

Die Scheibe kann in der Kappe drehfest gehalten sein oder, sollte es zweckmäßig sein, auch drehbar in dem Material der Kappe fixiert sein. Die Fixierung der Scheibe in der Kappe ist zweckmäßig so ausgebildet, dass bei einer Überlast die Scheibe relativ zur Kappe dreht. Damit wird gewährleistet, dass ein durch ein Werkzeug nur in die Scheibe eingeleitetes Drehmoment begrenzt ist.

Das Durchstoßen der Durchgriffsöffnung mit einem Werkzeug, welches größer als der Durchmesser der Durchgriffsöffnung ist, wird zweckmäßig dadurch sicher verhindert, dass die Scheibe aus einem Metall wie Stahl besteht.

Vorteilhaft weist die Durchgriffsöffnung einen kreisförmigen Querschnitt, insbesondere einen Kreisquerschnitt auf und ist zweckmäßig als zentrale Öffnung in der Scheibe ausgebildet. Die kreisförmige Ausbildung bzw. Kreisausbildung verhindert die Einleitung eines Drehmomentes in die Scheibe selbst. So kann ausgeschlossen werden, dass durch Einsetzen eines in der Durchgriffsöffnung verkantenden Werkzeugs ein Drehmoment aufgebracht werden kann, was oberhalb eines den Anschlag der Verstellsicherung zerstörenden Grenzdrehmomentes liegt.

Um dem Benutzer in einfacher Weise die Verstellung der Einstellschraube innerhalb der konstruktiv vorgesehenen Grenzen zu ermöglichen, ist die Kappe auf der der Einstellschraube abgewandten Seite der Durchgriffsöffnung mit Aussparungen für ein Einstellwerkzeug versehen. Vorteilhaft liegen die Aussparungen radial außerhalb der Durchgriffsöffnung, wobei die Scheibe zweckmäßig den Boden der Aussparung bildet. In einer einfachen Ausbildung liegen mindestens zwei Aussparungen bezogen auf die Durchgriffsöffnung einander etwa diametral gegenüber, so dass eine einfache Eingriffsöffnung für die Klinge eines Schraubendrehers oder dgl. gebildet ist. Die Ausbildung ist dabei so ausgelegt, dass bei Aufbringen eines überhöhten Drehmoments in den Kappenbereich oberhalb der Scheibe das Kappenmaterial oberhalb der Scheibe abschert, wodurch das einzuleitende Drehmoment ebenfalls begrenzt ist.

Durch vorteilhafte Gestaltung der Form der Aussparungen und deren Lage zueinander, z. B.sternförmige Anordnung, kann die Verwendung eines speziellen Verstellwerkzeugs erzwungen werden. Dabei kann das Verstellwerkzeug selbst so ausgebildet sein, dass es nur zum Aufbringen von Drehmomenten genutzt werden kann, die unterhalb des den Anschlag zerstörenden Grenzdrehmomentes liegen. Dies kann z. B. durch eine konstruktive Schwächung des Verstellelementes oder durch die Wahl eines entsprechenden Materials erreicht werden.

Vorteilhaft ist die Kappe selbst aus einem Hartkunststoff gefertigt.

Es kann zweckmäßig sein, die Kappe und die Scheibe einteilig auszubilden, sofern das Material der Kappe so gewählt ist, dass es formstabil ist, um so die Durchgriffsöffnung in ihrer Form und Öffnungsweite starr zu begrenzen.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: eine perspektivische Ansicht auf einen Membranvergaser,
- Fig. 2: eine Seitenansicht des Membranvergasers nach Fig. 1,
- Fig. 3: einen Teilschnitt durch das Vergasergehäuse längs der Linie III-III in Fig. 2,
- Fig. 4: eine perspektivische Darstellung eines Kopfes einer Einstellschraube,
- Fig. 5: eine perspektivische Darstellung einer Kappe der Verstellsicherung,
- Fig. 6: eine Draufsicht auf die Kappe der Verstellsicherung,
- Fig. 7: eine schematische Darstellung der Kappe und der Einstellschraube vor der Montage in Pfeilrichtung,
- Fig. 8: einen Teilschnitt durch das Vergasergehäuse gemäß Fig. 3 einer Verstellsicherung in einer anderen Ausführungsform,
- Fig. 9: eine perspektivische Ansicht auf einen Kopf einer Einstellschraube in einer anderen Ausführungsform,
- Fig. 10: eine schematische Darstellung eines weiteren Ausführungsbeispiels einer Kappe und einer Einstellschraube vor dem Zusammenfügen der Verstellsicherung,
- Fig. 11: einen schematischen Teilschnitt längs der Linie III-III in Fig. 2 mit zur Einstellschraube ausgerichteter, unmontierter Kappe der Verstellsicherung,
- Fig. 12: einen schematischen Teilschnitt entsprechend Fig. 11 mit vormontierter Kappe der Verstellsicherung,
- Fig. 13: einen schematischen Teilschnitt entsprechend Fig. 12 mit auf dem Kopf der Einstellschraube teilmontierter Kappe der Verstellsicherung,
- Fig. 14: einen schematischen Teilschnitt entsprechend Fig. 13 mit auf dem Kopf der Einstellschraube drehfest montierter Kappe der Verstellsicherung.

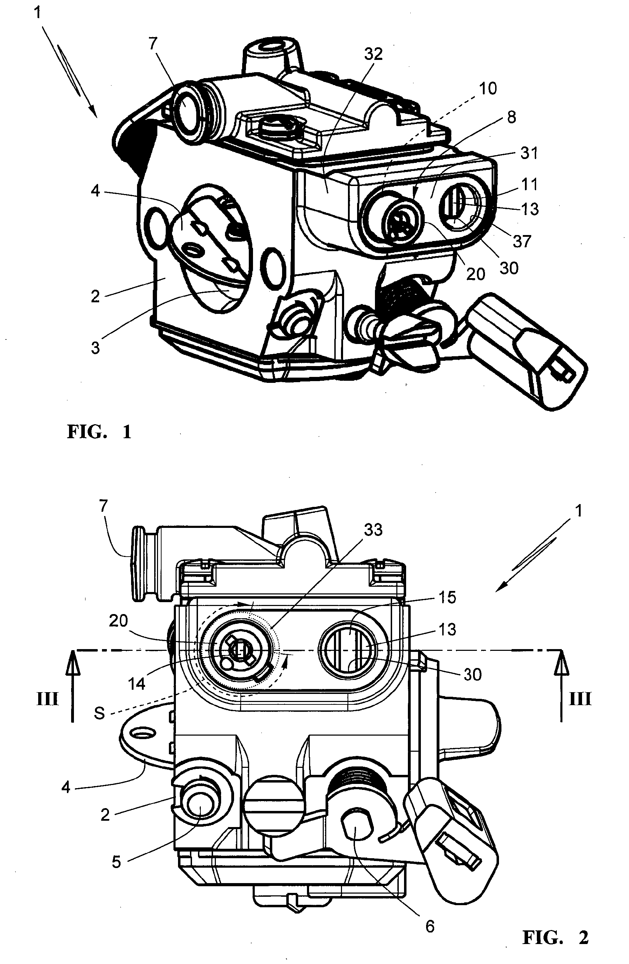

Der in Fig. 1 und 2 dargestellte Vergaser 1 besteht aus einem Vergasergehäuse 2, in dem ein Ansaugkanal 3 ausgebildet ist. Im Ansaugkanal 3 ist verschwenkbar eine Chokeklappe 4 sowie eine nicht näher dargestellte Drosselklappe vorgesehen, die mit einer Chokeklappenwelle 5 und einer Drosselklappenwelle 6 drehbar im Ansaugkanal 3 gehalten sind.

Dem Vergaser 1, der im gezeigten Ausführungsbeispiel ein Membranvergaser ist, wird über einen nicht näher dargestellten Anschluss Kraftstoff zugeführt, der über entsprechende Kanäle und Düsen in bekannter Weise in den Ansaugkanal 3 eintritt. Der dargestellte Anschlussstutzen 7 ist ein Kompensatoranschluss des Membranvergasers.

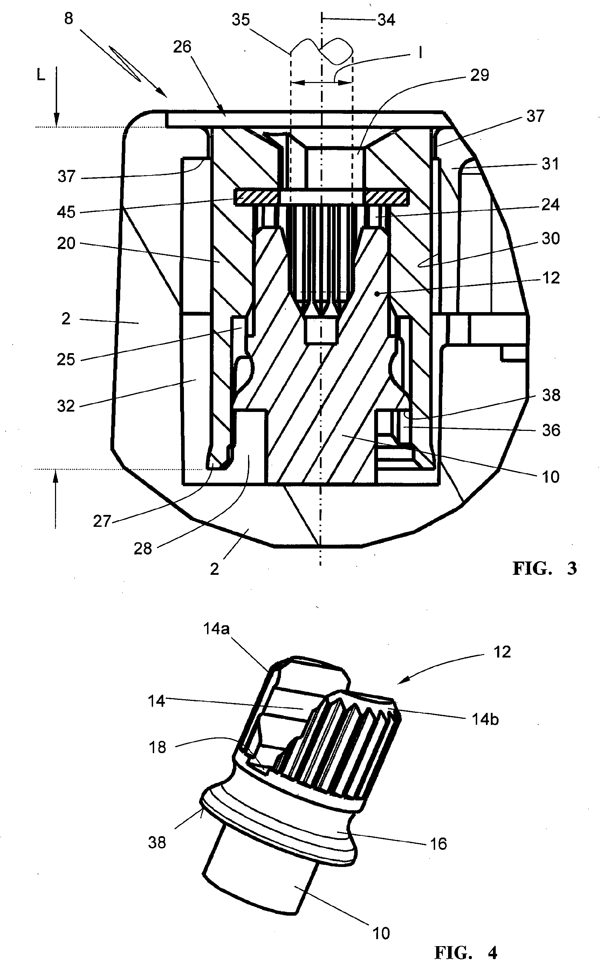

Zur Zumessung des Kraftstoffs sind in bekannter Weise Einstellschrauben 10, 11 vorgesehen, die als Leerlaufschraube bzw. Volllastschraube in nicht näher dargestellter Weise den Strömungsquerschnitt eines zugeordneten Kraftstoffkanals regeln. Im gezeigten Ausführungsbeispiel sind zwei Einstellschrauben 10 und 11 vorgesehen, die in das Vergasergehäuse 2 eingeschraubt sind und deren Köpfe 12 (Fig. 3) und 13 (Fig. 1, 2) eine Eingriffsöffnung 14, 15 (Fig. 2) für ein Einstellwerkzeug 35 (Fig. 3) aufweisen.

Im gezeigten Ausführungsbeispiel liegen die Köpfe 12 und 13 der Einstellschrauben 10 und 11 (Leerlaufschraube, Volllastschraube) auf einer Seite des Vergasergehäuses 2 in einem Aufnahmeraum 32 (Fig. 1), der fest mit dem Vergasergehäuse 2 verbunden ist. Die Wandungen des Aufnahmeraums 32 können am Vergasergehäuse 2 fest montiert sein oder einteilig mit diesem ausgebildet werden.

Der Aufnahmeraum 32 ist durch einen Einsatz 31 verschlossen, wobei in dem Einsatz 31 gehäusefeste Wandhülsen 30 ausgebildet sind.

Die Wandhülsen 30 definieren eine Öffnung, in welche eine Kappe 20 der Verstellsicherung 8 axial eingesetzt wird. Wie die Schnittdarstellung in Fig. 3 zeigt, übergreift die becherförmig ausgebildete Kappe 20 mit einem Verbindungsabschnitt 24 den Kopf 12 der Einstellschraube 10; sowohl der Verbindungsabschnitt 24 als auch der Kopf 12 der Einstellschraube 10 weisen eine Rändelung oder Zahnung auf (Figuren 3, 4), durch die eine formschlüssige, drehfeste Verbindung zwischen der Kappe 20 und der Einstellschraube 10 hergestellt wird.

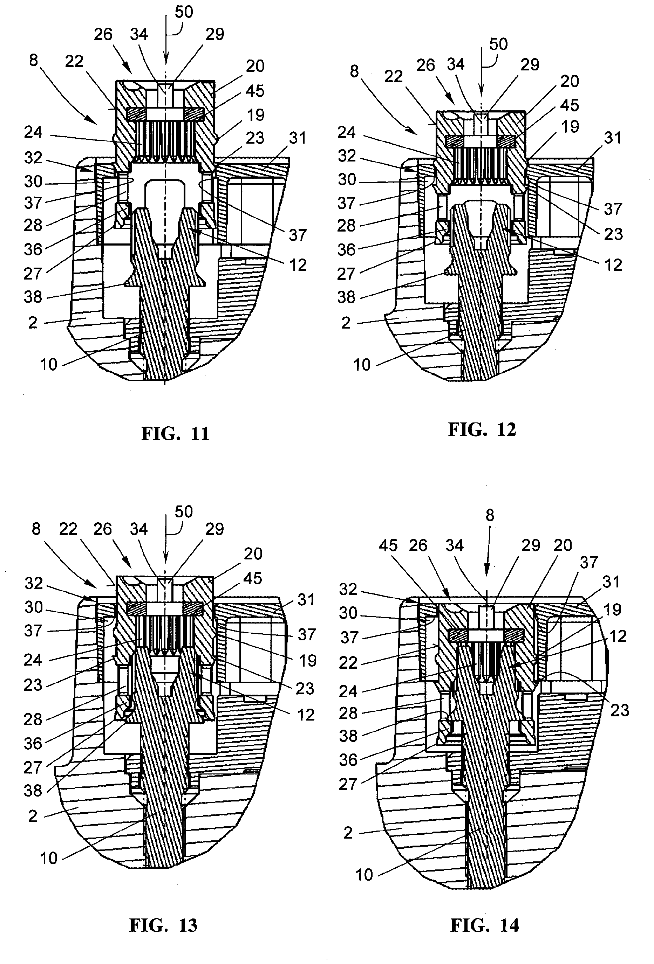

Im montierten Zustand der Kappe 20 - wie er in Fig. 3 und 14 dargestellt ist - ist die Kappe 20 über ihre gesamte axiale Länge L in dem Aufnahmeraum 32 aufgenommen, so dass ein Zugriff auf die Einstellschraube 10 nur noch über die in der Wandhülse 30 liegende axiale Stirnseite 26 der Kappe 20 möglich ist.

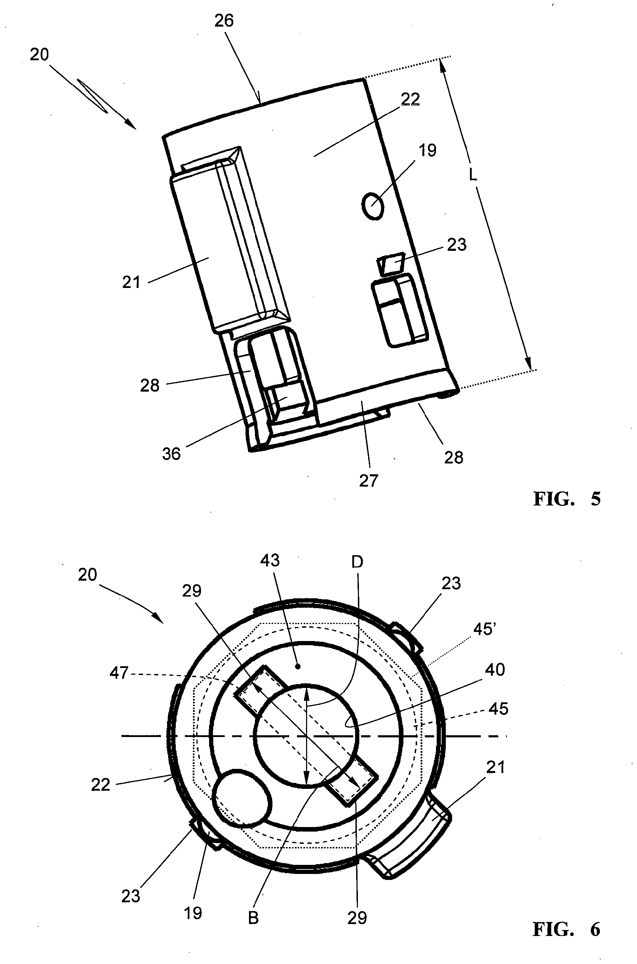

Die Kappe 20 hat im Wesentlichen eine zylindrische, becherförmige Grundform, wie sie in den Figuren 5, 6 und 7 dargestellt ist. Der gezahnte Verbindungsabschnitt 24 liegt etwa in der oberen Hälfte der zylindrischen Kappe 20, während in der unteren Hälfe der Kappe 20 im Wesentlichen ein Hohlraum 25 ausgebildet ist, in dem bei Aufdrücken der Kappe 20 auf den Kopf 12 der Einstellschraube 10 das Kopfunterteil 16 aufgenommen ist.

Auf ihrem Außenumfang 22 (Fig. 5) trägt die Kappe einen Ansatz 21, der sich radial vom Außenumfang 22 weg erstreckt. Der Ansatz 21 erstreckt sich in axialer Richtung der Kappe 20 über etwa deren halbe Höhe und endet mit Abstand vor deren oberer Stirnseite 26. Auf halber Höhe der Kappe 20 sind ferner Rastnoppen 19 und Rastnasen 23 vorgesehen, die mit einem Rand 37 im Kopfbereich der Wandhülse 30 zusammenwirken. Im gezeigten Ausführungsbeispiel sind zwei einander diametral gegenüberliegende Rastnoppen 19 und Rastnasen 23 am Außenumfang 22 der Kappe 20 vorgesehen.

Zur Montage der Verstellsicherung 8 wird zunächst der Aufnahmeraum 32 durch den Einsatz 31 verschlossen, wobei der Einsatz 31 mit der Wandung des Aufnahmeraums 32 derart verrastet, dass er nur durch Zerstörung demontiert werden kann. Somit sind der Einsatz 31 und damit seine Wandhülsen 30 mit dem Vergasergehäuse 2 gehäusefest verbunden.

Wie Fig. 3 zeigt, liegt die Einstellschraube 10 koaxial zur Längsmittelachse 34 der Wandhülse 30, wobei der Kopf 12 der Einstellschraube 10 axial in die Wandhülse 30 einragt. Nunmehr wird die Kappe 20 in die Wandhülse 30 so weit eingeschoben, dass im Wesentlichen die Rastnasen 32 (Fig. 5) den leicht nach innen gezogenen Rand 37 der Wandhülse 30 überfahren und somit die Kappe 20 in der Wandhülse 30 zunächst unverlierbar am Vergasergehäuse 2 vormontiert gehalten ist (Fig. 12). Um in der vormontierten Lage einen Eingriff der Kappe 20 mit dem Kopf 12 der Einstellschraube 10 sicher auszuschließen, ist ein weiteres axiales Einschieben der Kappe 20 durch die Rastnoppen 19 behindert. In der vormontierten Lage der Kappe 20 liegt der Rand 37 der Wandhülse 30 zwischen den Rastnasen 32 und den Rastnoppen 19 (Fig. 12).

Zur Erzielung einer ausreichenden Elastizität des unteren Randes der Kappe 20 sind in deren Wandabschnitte einander gegenüberliegende Ausnehmungen 28 vorgesehen. Zur Versteifung der unteren Kante der Wandabschnitte der Kappe 20 ist die Kante als aufgedickter, leicht nach außen ausgestellter Rand 27 ausgebildet.

Wie in Fig. 6 in Draufsicht erkennbar, ist in der Kappe 20 eine zentrale Durchgriffsöffnung 40 vorgesehen, die zur Längsmittelachse 34 ausgerichtet liegt und einen Zugriff auf die Eingriffsöffnung 14 ermöglicht. Der Durchmesser D (Fig. 6) der Durchgriffsöffnung 40 ist kleiner ausgebildet als die Eingriffsöffnung 14, so dass ein angepasstes Werkzeug einfach in den Kopf 12 der Stellschraube 10 eingesetzt werden kann. Das Einstellwerkzeug 35 ist im gezeigten Ausführungsbeispiel z. B. ein Inbusschlüssel oder dgl., dessen Durchmesser I (Fig. 3) kleiner ist als der Durchmesser D (Fig. 6) der vorteilhaft kreisförmig ausgebildeten Durchgriffsöffnung 40. Im gezeigten Ausführungsbeispiel ist die Durchgriffsöffnung 40 als Kreis gestaltet.

Die Durchgriffsöffnung 40 ist in einer Scheibe 45 ausgebildet, die im Material der Kappe 20 fixiert ist. Die Scheibe 45 ist vorteilhaft in das Material der Kappe 20 eingespritzt.

Die Scheibe 45 besteht aus einem formstabilen, metallischen Material und ist in der Kappe 20 verliersicher, insbesondere drehfest gehalten. Es kann zweckmäßig sein, die Scheibe 45 drehbar in der Kappe 20 zu halten.

Im gezeigten Ausführungsbeispiel ist die Durchgriffsöffnung 40 als zentrale Kreisöffnung in einer kreisrunden Scheibe 45 ausgebildet; es kann auch zweckmäßig sein, die Scheibe als Vieleck 45' (Fig. 6), als elliptische Scheibe oder Scheibe mit dgl. räumlicher Gestalt auszubilden. Eine von der Kreisform abweichende Scheibe 45 hat den Vorteil, dass diese aufgrund ihrer Form nach einem Eingießen oder Einspritzen in die Kappe drehfest in dieser gesichert ist.

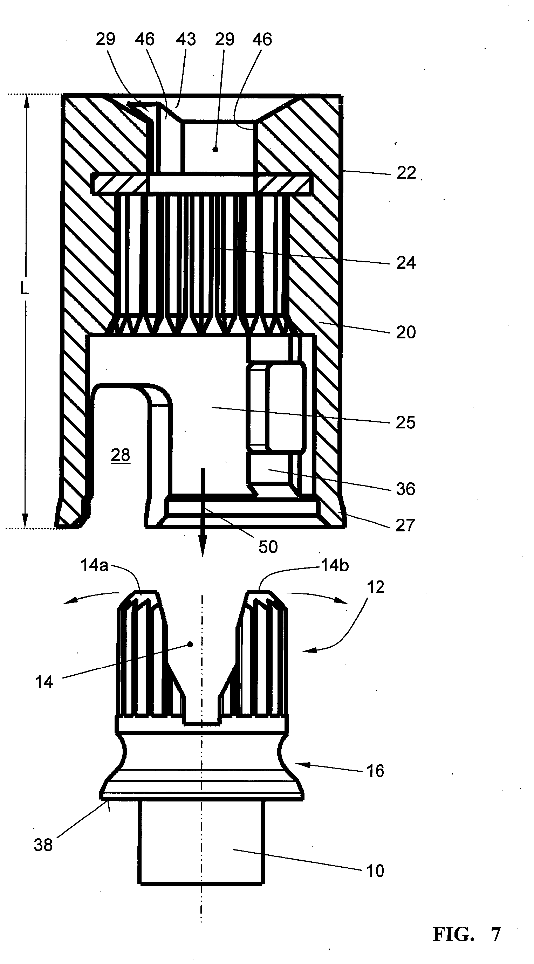

Die durch Hintergreifen des Randes 37 in der Wandhülse 30 durch die Rastnasen 23 und die Rastnoppen 19 axial vorfixierte Kappe 20 lässt ein Drehen der Einstellschraube 10 ohne Drehbewegung der Kappe 20 zu; die Einstellschraube 10 und die Kappe 20 sind miteinander noch nicht drehfest fixiert. Nachdem mittels des Einstellwerkzeugs 35 die Einstellschraube 10 betriebsgerecht eingestellt ist, um den notwendigen Zutritt von Kraftstoff zu dem Ansaugkanal 3 zu gewährleisten, wird unter Überwindung des Widerstandes der Rastnoppen 19 die Kappe 20 in Pfeilrichtung 50 (Fig. 7, Fig. 13 und 14) auf den Kopf 12 der Einstellschraube 10 aufgedrückt, bis die Rastnasen 36 den Rand 38 des Kopfes 12 der Einstellschraube 10 hintergreifen und so die Kappe 20 in ihrer montierten Lage auf der Einstellschraube 10 axial formschlüssig gesichert ist (Fig. 3, 8, 14).

Die Wandhülse 30 umgibt die in ihr liegende Kappe 20 mit geringem radialen Spiel, wobei die Wandhülse 30 einen Gegenanschlag 33 (Fig. 2) aufweist, der mit dem Ansatz 21 der Kappe 20 zusammenwirkt. Wie in Fig. 2 gezeigt, liegt der Gegenanschlag 33 im Drehweg des Ansatzes 21, so dass die auf den Kopf 12 der Einstellschraube 10 aufgedrückte Kappe nur noch über einen begrenzten Drehwinkel S verstellbar ist. Ein derartiger Drehwinkel S kann z. B. ca. 200° bis 280° betragen. Soll ein kleinerer Drehwinkel S ausgeführt sein, kann der Gegenanschlag 33 in der Wandhülse 30 in Umfangsrichtung länger ausgeführt werden. Da die Wandhülse 30 mit ihrem Gegenanschlag 33 an dem Einsatz 31 ausgebildet ist, können je nach Bauart des Vergasers angepasst gestaltete Einsätze 31 mit dem Vergasergehäuse 2 verrastet werden.

Will ein Benutzer z. B. einer Motorkettensäge den darin verbauten Vergaser in seinen Einstellungen ändern, so kann er dieses nur noch im Bereich des Stellweges S. Hierzu sind in der Stirnseite 26 der Kappe Aussparungen 29 vorgesehen, wobei im Ausführungsbeispiel bezogen auf die Durchgriffsöffnung 40 zwei Aussparungen 29 einander diametral gegenüberliegen. Die Aussparungen 29 liegen - wie Fig. 3 zeigt - auf der der Einstellschraube 10 abgewandten Seite der Scheibe 45.

Der Benutzer kann mit einem Schraubendreher oder dgl. Werkzeug in die Stirnseite 26 eintauchen, wobei die Klinge 47 des Schraubendrehers in den Aussparungen 29 der Kappe 20 aufgenommen ist (Fig. 6). Da - wie z. B. Fig. 7 zeigt - in der Stirnseite 26 eine Vertiefung 43 nach Art eines Kegelstumpfes ausgebildet ist, sind die Flanken 46 der Aussparungen 29 in ihrer Höhe konstruktiv vorgegeben. Dabei wird die Auslegung so getroffen, dass mit einem Schraubendreher nur ein begrenztes Drehmoment aufgebracht werden kann. Dieses begrenzt aufzubringende Drehmoment ist geringer als das Widerstandsmoment, welches durch Anschlagen des Ansatzes 21 an den Gegenanschlag 33 in der Wandhülse zerstörungsfrei aufgebracht werden kann.

Durch die Tiefe der Aussparungen 29 ist die Breite B einer Schraubendreherklinge 47 vorgegeben; breitere Klingen erlauben keinen Zugriff zur Einstellung der Einstellschraube 10.

Auch ist ein Durchstoßen mit der Schraubendreherklinge 47 nicht ohne Weiteres möglich, da die Scheibe 45 aus einem formstabilen, metallischen Material ausgebildet ist, welches die Form und die Öffnungsweite der Durchgriffsöffnung 40, also den Durchmesser D konstruktiv starr festlegt. Vorzugsweise ist die Scheibe 45 aus einem Metall wie Stahl oder Federstahl ausgeführt, so dass ein hohes Widerstandsmoment gegen Durchstoßen zum Kopf 12 der Einstellschraube gegeben ist.

Auch mit dem nach Durchtritt durch die Durchgriffsöffnung 40 am Kopf 12 der Einstellschraube 10 angreifenden Einstellwerkzeug 35 lässt sich die Begrenzung des Drehweges S durch den Ansatz 21 und den Gegenanschlag 33 nicht überwinden. Durch die konstruktive Größe des Einstellwerkzeugs 35 ist zunächst gewährleistet, dass keine großen Drehmomente aufgebracht werden können. Darüber hinaus ist vorgesehen, den Kopf 12 der Einstellschraube 10 derart auszubilden, dass er sich bei Aufbringen eines Grenzmomentes in seiner Form und/oder seiner Öffnungsweite elastisch oder zerstörend verändert. Im dargestellten Ausführungsbeispiel wird eine Veränderung dadurch gewährleistet, dass die die Eingriffsöffnung 14 im Kopf 12 der Einstellschraube 10 begrenzenden Wände 14a, 14b radial elastisch ausweichen, so dass ein Einstellwerkzeug 35 in der Eingriffsöffnung 14 durchdreht. Ab einer bestimmten elastischen Verformung kann eine zerstörende Wirkung vorgesehen sein, so dass die Form und/oder Öffnungsweite der Eingriffsöffnung 14 bleibend zerstört ist.

Ist die Montage der Verstellsicherung 8 abgeschlossen, also die Kappe 20 auf den Kopf 12 der Einstellschraube 10 in die Wandhülse 30 axial eingedrückt und durch die inneren Rastnasen 36 am Kopf 12 der Einstellschraube 10 verrastet, ist eine Verstellung der Einstellschraube 10 nur noch im Bereich des Stellweges S möglich, der durch den Ansatz 21 an der Kappe 20 und den Gegenanschlag 33 in der Wandhülse 30 konstruktiv vorgegeben ist. Einem Abscheren des Ansatzes 21 von der Kappe 20 durch Aufbringen eines großen Drehmomentes ist durch konstruktive Maßnahmen entgegengewirkt:
- Aufgrund der Größe der Durchgriffsöffnung 40 in der Scheibe 45 ist nur ein im Durchmesser I begrenztes Einstellwerkzeug 35 in die Eingriffsöffnung 14 der Einstellschraube 10 einführbar (Fig. 3).
- Das durch das Einstellwerkzeug 35 auf die Einstellschraube 10 aufbringbare Drehmoment ist durch konstruktive Gestaltung des Kopfes 12 begrenzt; bei Überschreiten eines Grenzmomentes weichen die die Eingriffsöffnung 14 begrenzenden Wände 14a, 14b elastisch oder zerstörend radial aus, so dass das Einstellwerkzeug in der Eingriffsöffnung 14 durchdreht (Fig. 7).
- Die Verwendung eines großen Werkzeugs zum Aufbringen größerer Verstellmomente ist nicht möglich, da die Scheibe 45 das Einführen größerer Werkzeuge in die Eingriffsöffnung 14 der Einstellschraube 10 konstruktiv sperrt (Fig. 3).
- Ein Überwinden der durch die Scheibe 45 ausgebildeten Zugangssperre zur Eingriffsöffnung 14 im Kopf 12 der Einstellschraube ist nur schwer möglich, da die Scheibe 45 aus einem metallischen Material, insbesondere aus Stahl ausgebildet ist.
- Die Verstellung der Einstellschraube mittels Drehen der Kappe 20 ist durch ein Werkzeug möglich, welches in entsprechende Aussparungen 29 in der Stirnseite 26 der Kappe 20 eingesetzt wird; durch die Größe der Aussparungen und die Form der Stirnseite 26 (kegelige Ansenkung) ist mit einem Schraubendreher ein nur begrenztes Drehmoment über die Kappe 20 auf die Einstellschraube 10 aufzubringen (Fig. 6).

All diese Maßnahmen gewährleisten, dass ein willkürliches Abscheren des Ansatzes 21 durch Aufbringen eines großen Drehmomentes weitgehend unterbunden ist, so dass der konstruktiv zugelassene Drehwinkel S einer Einstellschraube nicht verlassen werden kann.

Im Ausführungsbeispiel ist die Kappe vorteilhaft aus einem Kunststoff gefertigt; auch andere geeignete formstabile Materialien können verwendet werden, insbesondere metallisches Material wie Zink, Magnesium, Aluminium oder dgl. Material.

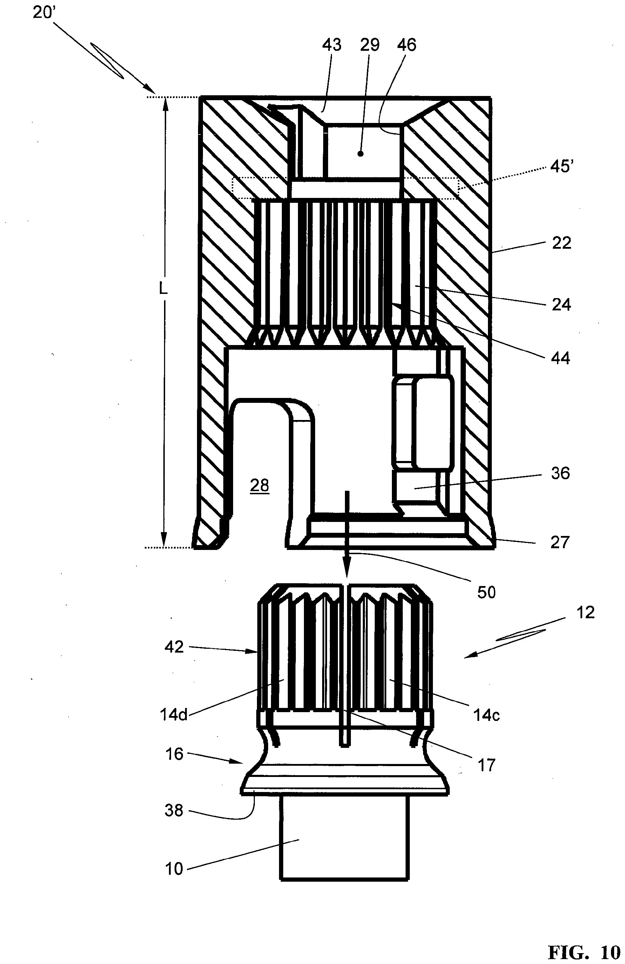

Wird ein formstabiles, widerstandsfähiges Material für die Kappe 20 verwendet, kann es zweckmäßig sein, die Kappe 20 und die Scheibe 45 einteilig auszubilden (Fig. 10).

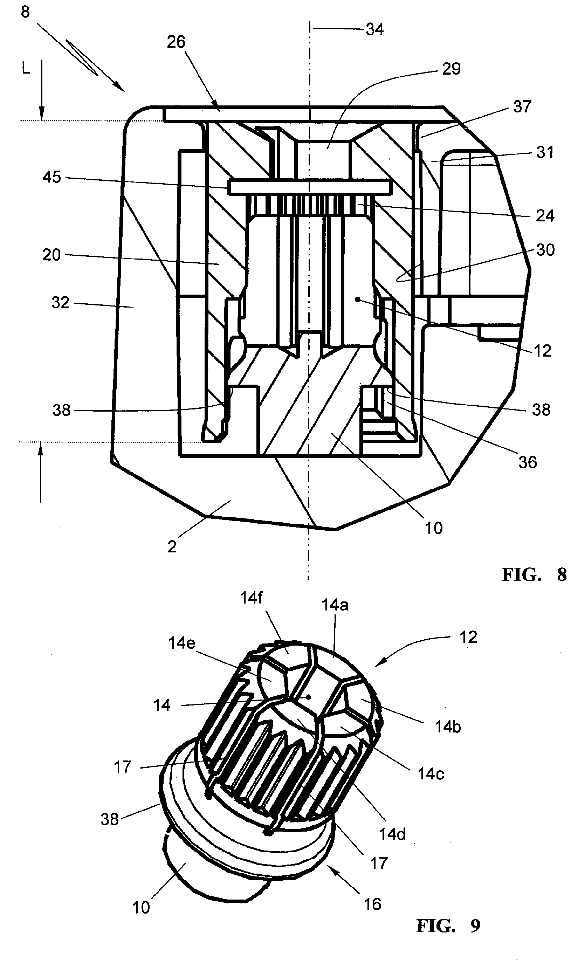

Das in den Figuren 8 und 9 dargestellte Ausführungsbeispiel unterscheidet sich von dem ersten Ausführungsbeispiel in einer anderen Ausbildung des Kopfes 12 der Einstellschraube 10. Die Eingriffsöffnung 14 ist zum Eingriff eines Inbusschlüssels oder dgl. vorgesehen und die Wandung der Eingriffsöffnung 14 durch Eingriffsschlitze 18 in Wandabschnitte 14a bis 14f unterteilt. Wird auf die Einstellschraube 10 ein oberhalb eines Grenzwertes liegendes Drehmoment aufgebracht, so weichen die Wandabschnitte 14a bis 14f elastisch oder zerstörend radial aus und der eingreifende Inbus dreht in der Eingriffsöffnung 14 durch. Konstruktiv ist eine Begrenzung des maximal zulässigen Drehmomentes auf die Einstellschraube 10 erreicht.

In Fig. 8 ist die Montage der Kappe 20 auf den Kopf 12 der Einstellschraube 10 nach Fig. 9 und ihre Einbaulage im Vergasergehäuse 2 wiedergegeben. Gleiche Teile sind mit gleichen Bezugszeichen wie in Fig. 3 versehen.

Im Ausführungsbeispiel nach Fig. 10 ist eine Kappe 20' gezeigt, bei der die strichliert angedeutete Scheibe 45' einteilig mit dem Material der Kappe 20' ausgeführt ist. Die Kappe 20' wird - wie durch den Pfeil 50 angedeutet - auf den Kopf 12 der Einstellschraube 10 aufgedrückt, wobei die Außenzahnung 42 des Kopfes 12 mit der Innenzahnung 44 des inneren Verbindungsabschnitts 24 formschlüssig ineinandergreift. Die Einstellschraube 10 kann so nur mit der Kappe 20' gemeinsam verdreht werden, wobei die Kappe 20' einen auf dem Außenumfang 22 vorstehenden Ansatz 21 aufweist, wie in Fig. 5 gezeigt.

In den Fig. 11 bis 14 ist der Einsatz der Kappe 20 bei einer Verstellsicherung 8 von der Vormontage (Fig. 11, 12) bis zur Endmontage (Fig. 14) dargestellt. Für gleiche Teile wurden gleiche Bezugszeichen wie in den vorhergehenden Ausführungsbeispielen 1 bis 10 verwendet.

In der Vormontage wird nach Einschrauben der Einstellschrauben 10 bzw. 11 der Aufnahmeraum 32 des Vergasers 2 durch den Einsatz 31 verschlossen, wobei der Kopf einer Einstellschraube 10 in der Wandhülse 30 zu liegen kommt, welche in dem Einsatz 31 ausgebildet ist. Der Einsatz 31 ist im Aufnahmeraum 32 des Vergasers derart festgelegt, dass ein Ausbau des Einsatzes 31 nur durch Zerstören des Einsatzes möglich ist.

In der Vormontage wird ferner die Wandhülse 30 durch die Kappe 20 verschlossen, wobei die Kappe 20 in Pfeilrichtung 50 so weit in die Wandhülse 30 eingedrückt wird, bis die Rastnase 23 der Kappe 20 den oberen Rand 37 der Aufnahmehülse verrastend überfährt. Die Rastnoppen 19 verhindern zunächst ein tieferes Eindrücken der Kappe 20 in die Wandhülse, so dass in der vormontierten Stellung gemäß Fig. 12 der Rand 37 der Wandhülse 30 axial zwischen der Rastnase 23 und dem Rastnoppen 19 der Kappe 20 gefangen liegt. Die Kappe 20 ist einerseits axial verliersicher gehalten; andererseits verhindern die Noppen 19 ein weiteres axiales Eintauchen der Kappe 20 in die Wandhülse 30.

In der vormontierten Lage gemäß Fig. 12 ist die Einstellschraube 10 unabhängig von der Kappe 20 zu drehen, da die Rändelung des Kopfes 12 der Einstellschraube 10 noch nicht mit der Rändelung im Verbindungsabschnitt 24 der Kappe 20 in Eingriff tritt. In dieser vormontierten Lage der Kappe 20 kann somit im Werk eine bedarfsgerechte Einstellung der Einstellschraube 10 erfolgen. Bei dieser Einstellung sind die Kappe 20 und die Einstellschraube 10 voneinander getrennt.

Ist die Einstellung der Einstellschraube 10 abgeschlossen, wird bei der weiteren Montage in Pfeilrichtung 50 (Fig. 13) die Kappe 20 tiefer in die Wandhülse 30 eingedrückt, wobei zunächst der Rastwiderstand der Noppen 19 überwunden werden muss, damit diese den Rand 37 überfahren. Nach Überfahren des oberen Randes 37 durch die Rastnoppen 19 tritt der Kopf 12 in den Verbindungsabschnitt 24 der Kappe 20 ein, wobei die Rändelung des Kopfes 12 und die Rändelung des Verbindungsabschnitts 24 miteinander drehfest in Eingriff treten. Die Kappe 20 wird weiter in Pfeilrichtung 50 eingedrückt, bis sie die Einstellung gemäß Fig. 14 erreicht hat.

In der Endstellung der Kappe 20 der Verstellsicherung 8 gemäß Fig. 14 hintergreifen die inneren Rastnasen 36 den Rand 38 der Einstellschraube 10 und verrasten hinter diesem. Die Kappe 20 ist axial unverlierbar mit der Einstellschraube 10 verbunden; über die Rändelung zwischen Kopf 12 und Verbindungsabschnitt 24 ist eine drehfeste Kopplung der Kappe 20 mit der Einstellschraube 10 gewährleistet.

## Patentansprüche

1. Verstellsicherung für eine Einstellschraube (10) an einem Vergaser (1), insbesondere an einem Membranvergaser oder dgl. in einem handgeführten Arbeitsgerät wie einer Motorkettensäge oder dgl., bestehend aus einer auf einem Kopf (12, 13) einer in ein Vergasergehäuse (2) eingeschraubten Stellschraube (10, 11) drehfest gehaltenen Kappe (20, 20'), die mit geringem radialen Spiel von einer etwa koaxial liegenden, vergasergehäusefesten Wandhülse (30) umgeben ist, und mit einer Begrenzung des Drehwinkels (S) der Kappe (20, 20') in der Wandhülse (30), wozu in Drehrichtung der Einstellstellschraube (10, 11) ein gehäusefester Drehanschlag (33) vorgesehen ist, wobei in der Kappe (20, 20') eine Durchgriffsöffnung (40) zu einer Eingriffsöffnung (14, 15) im Kopf (12, 13) der Einstellschraube (10, 11) ausgebildet ist,
**dadurch gekennzeichnet, dass** die Kappe (20, 20') aus Kunststoff besteht, wobei die Durchgriffsöffnung (40) in einer Scheibe (45) aus einem metallischen Material ausgebildet ist, die in der Kappe (20, 20') verliersicher gehalten ist und durch die Scheibe (45) die Durchgriffsöffnung (40) in ihrer Form und Öffnungsweite (D) begrenzt ist, wobei zur Begrenzung eines maximal zulässigen Verstellmomentes die Eingriffsöffnung (14, 15) im Kopf (12, 13) der Einstellschraube (10, 11) in ihrer Form und/oder Öffnungsweite nachgiebig ausgebildet ist.

2. Verstellsicherung nach Anspruch 1,
**dadurch gekennzeichnet, dass** die im Kopf (12, 13) der Einstellschraube (10, 11) vorgesehene Eingriffsöffnung (14, 15) für ein Einstellwerkzeug (35) von Wandabschnitten (14a, 14b, 14c, 14d, 14e, 14f) begrenzt ist, die bei Überschreiten eines maximal zulässigen Verstellmomentes radial ausweichen.

3. Verstellsicherung nach Anspruch 2,
**dadurch gekennzeichnet, dass** die die Eingriffsöffnung (14, 15) begrenzenden Wände durch Axialschlitze (17) in mehrere nachgiebige Wandabschnitte (14a, 14b, 14c, 14d, 14e, 14f) aufgeteilt sind.

4. Verstellsicherung nach Anspruch 1,
**dadurch gekennzeichnet, dass** die Scheibe (45) in der Kappe (20, 20') drehfest gehalten ist.

5. Verstellsicherung nach einem der Ansprüche 1 bis 4,
**dadurch gekennzeichnet, dass** die Scheibe (45) aus Stahl besteht.

6. Verstellsicherung nach einem der Ansprüche 1 bis 5,
**dadurch gekennzeichnet, dass** die Durchgriffsöffnung (40) eine vorzugsweise zentrale Öffnung mit einem kreisförmigen Querschnitt ist.

7. Verstellsicherung nach einem der Ansprüche 1 bis 6,
**dadurch gekennzeichnet, dass** die Kappe (20, 20') auf der der Einstellschraube (10, 11) abgewandten Seite der Durchgriffsöffnung (40) Aussparungen (29) für ein Einstellwerkzeug aufweist.

8. Verstellsicherung nach Anspruch 7,
**dadurch gekennzeichnet, dass** in Draufsicht auf die Durchgriffsöffnung (40) die Aussparungen (29) radial außerhalb der Durchgriffsöffnung (40) liegen.

9. Verstellsicherung nach Anspruch 7 oder 8,
**dadurch gekennzeichnet, dass** bezogen auf die Durchgriffsöffnung (40) mindestens zwei Aussparungen (29) einander gegenüberliegen.

10. Verstellsicherung nach einem der Ansprüche 1 bis 9,
**dadurch gekennzeichnet, dass** die Kappe (20, 20') aus Hartkunststoff besteht.

11. Verstellsicherung nach Anspruch 1,
**dadurch gekennzeichnet, dass** die Kappe (20') und die Scheibe (45) einteilig ausgebildet sind.

## Claims

1. Adjustment securing means for an adjusting screw (10) on a carburettor (1), in particular on a diaphragm carburettor or the like, in a hand-guided working implement such as a motorised chain saw or the like, consisting of a cap (20, 20'), which is held non-rotatably on a head (12, 13) of an adjusting screw (10, 11) tightened into a carburettor housing (2), and which is surrounded with slight radial play by an approximately coaxial wall sleeve (30) fixed to the carburettor housing, the rotary angle (S) of the cap (20, 20') being restricted in the wall sleeve (30), for which purpose a rotation stop (33) fixed to the housing is provided in the direction of rotation of the adjusting screw (10, 11), wherein a through-opening (40) to an engagement opening (14, 15) in the head (12, 13) of the adjusting screw (10, 11) is formed in the cap (20, 20'),
**characterised in that** the cap (20, 20') is made of plastic, wherein the through-opening (40) is formed in a disc (45) of a metallic material, which is held captive in the cap (20, 20'), and wherein the through-opening (40) is restricted by the disc (45) in its shape and aperture width (D), wherein the engagement opening (14, 15) in the head (12, 13) of the adjusting screw (10, 11) is designed to be flexible in its shape and/or aperture width in order to limit a maximum permitted adjusting torque.

2. Adjustment securing means according to claim 1,
**characterised in that** the engagement opening (14, 15) provided in the head (12, 13) of the adjusting screw (10, 11) for an adjusting tool (35) is bounded by wall sections (14a, 14b, 14c, 14d, 14e, 14f), which yield radially if a maximum permitted adjusting torque is exceeded.

3. Adjustment securing means according to claim 2,
**characterised in that** the walls bounding the engagement opening (14, 15) are divided into several yielding wall sections (14a, 14b, 14c, 14d, 14e, 14f) by axial slots (17).

4. Adjustment securing means according to claim 1,
**characterised in that** the disc (45) is non-rotatably held in the cap (20, 20').

5. Adjustment securing means according to any of claims 1 to 4,
**characterised in that** the disc (45) is made of steel.

6. Adjustment securing means according to any of claims 1 to 5,
**characterised in that** the through-opening (40) is a preferably central opening with a circular cross-section.

7. Adjustment securing means according to any of claims 1 to 6,
**characterised in that** the cap (20, 20') has recesses (29) for an adjusting tool on that side of the through-opening (40) which is remote from the adjusting screw (10, 11).

8. Adjustment securing means according to claim 7,
**characterised in that** the recesses (29) are located radially outside the through-opening (40) in a top view of the through-opening (40).

9. Adjustment securing means according to claim 7 or 8,
**characterised in that** at least two recesses (29) are located opposite one another relative to the through-opening (40).

10. Adjustment securing means according to any of claims 1 to 9,
**characterised in that** the cap (20, 20') is made of a hard plastic material.

11. Adjustment securing means according to claim 1,
**characterised in that** the (20') and the disc (45) are formed as a single part.

## Revendications

1. Sécurité de réglage pour une vis de réglage (10) sur un carburateur (1), en particulier sur un carburateur à membrane ou similaire dans un outillage tenu à la main tel qu'une tronçonneuse à chaîne, composée d'un chapeau (20, 20') qui est retenu, fixe en rotation, sur une tête (12, 13) d'une vis de réglage (10, 11) vissée dans un carter de carburateur (2) et qui est entouré avec un faible jeu radial par un manchon de paroi (30) à peu près coaxial et solidaire du carter de carburateur, et avec une limitation de l'angle de rotation (S) du chapeau (20, 20') dans le manchon (30), une butée de rotation (33) solidaire du carter étant prévue à cet effet dans le sens de rotation de la vis de réglage (10, 11), une ouverture de passage (40) qui mène à une ouverture d'accès (14, 15) prévue dans la tête (12, 13) de la vis de réglage (10, 11) étant formée dans le chapeau (20, 20'),
**caractérisée en ce que** le chapeau (20, 20) est en matière plastique, l'ouverture de passage (40) étant formée dans une plaque (45) qui est composée d'un matériau métallique et qui est retenue de manière imperdable dans ledit chapeau (20, 20'), et l'ouverture de passage (40) étant limitée dans sa forme et sa largeur d'ouverture (D) par ladite plaque (45), l'ouverture d'accès (14, 15) prévue dans la tête (12, 13) de la vis de réglage (10, 11) étant formée, pour limiter un moment de réglage maximal autorisé, avec une forme et/ou une largeur d'ouverture flexibles.

2. Sécurité de réglage selon la revendication 1,
**caractérisée en ce que** l'ouverture d'accès (14, 15) prévue dans la tête (12, 13) de la vis de réglage (10, 11) pour un outil de réglage (35) est limitée par des sections de paroi (14a, 14b, 14c, 14d, 14e, 14f) qui dévient radialement si un moment de réglage maximal autorisé est dépassé.

3. Sécurité de réglage selon la revendication 2,
**caractérisée en ce que** les parois qui limitent l'ouverture d'accès (14, 15) sont divisées par des fentes axiales (17) en plusieurs sections de paroi flexibles (14a, 14b, 14c, 14d, 14e, 14f).

4. Sécurité de réglage selon la revendication 1,
**caractérisée en ce que** la plaque (45) est retenue fixe en rotation dans le chapeau (20, 20').

5. Sécurité de réglage selon l'une des revendications 1 à 4,
**caractérisée en ce que** la plaque (45) se compose d'acier.

6. Sécurité de réglage selon l'une des revendications 1 à 5,
**caractérisée en ce que** l'ouverture de passage (40) est une ouverture de préférence centrale avec une section transversale circulaire.

7. Sécurité de réglage selon l'une des revendications 1 à 6,
**caractérisée en ce que** le chapeau (20, 20') présente sur le côté de l'ouverture de passage (40) opposé à la vis de réglage (10, 11) des évidements (29) pour un outil de réglage.

8. Sécurité de réglage selon la revendication 7,
**caractérisée en ce que** sur une vue de dessus de l'ouverture de passage (40), les évidements (29) sont situés radialement à l'extérieur de ladite ouverture de passage (40).

9. Sécurité de réglage selon la revendication 7 ou 8,
**caractérisée en ce que** par rapport à l'ouverture de passage (40), au moins deux évidements (29) se trouvent à l'opposé l'un de l'autre.

10. Sécurité de réglage selon l'une des revendications 1 à 9,
**caractérisée en ce que** le chapeau (20, 20') se compose de matière plastique dure.

11. Sécurité de réglage selon la revendication 1,
**caractérisée en ce que** le chapeau (20') et la plaque (45) sont formés d'une seule pièce.
